(19) Europäisches Patentamt
European Patent Office
Office européen des brevets

(11) Veröffentlichungsnummer: **0 019 146**
**B1**

(12) # EUROPÄISCHE PATENTSCHRIFT

(45) Veröffentlichungstag der Patentschrift: **23.06.82**

(51) Int. Cl.³: **C 08 J 9/10,** C 08 K 5/23

(21) Anmeldenummer: **80102336.7**

(22) Anmeldetag: **30.04.80**

(54) **Treibmittelkombination auf Basis Azodicarbonamid, deren Herstellung und Verwendung zur Herstellung von porösen Artikeln aus thermoplastischen Kunststoffen.**

(30) Priorität: **11.05.79 DE 2918964**

(43) Veröffentlichungstag der Anmeldung: **26.11.80 Patentblatt 80/24**

(45) Bekanntmachung des Hinweises auf die Patenterteilung: **23.06.82 Patentblatt 82/25**

(84) Benannte Vertragsstaaten: **AT BE CH DE FR GB IT LI NL SE**

(56) Entgegenhaltungen:
**DE-A-1 569 227**
**DE-A-2 102 177**

(73) Patentinhaber: **BAYER AG, Zentralbereich Patente, Marken und Lizenzen, D-5090 Leverkusen 1, Bayerwerk (DE)**

(72) Erfinder: **Roos, Ernst, Dr., Am Geus Garten 6, D-5068 Odenthal (DE)**
Erfinder: **Jeblick, Werner, Dr., Walter Flex-Strasse 30, D-5090 Leverkusen 1 (DE)**
Erfinder: **Hurnik, Helmut, Ing-Grad., Bonner Strasse 5, D-5090 Leverkusen 3 (DE)**

**EP 0 019 146 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Treibmittelkombination auf Basis Azodicarbonamid, deren Herstellung und Verwendung zur Herstellung von porösen Artikeln aus thermoplastischen Kunststoffen

Gegenstand der Erfindung ist eine Treibmittelkombination auf der Basis von Azodicarbonamid, Zinkoxid und einem Benzolthiolsulfonsäure-derivat, deren Herstellung durch Mischen der Komponenten sowie deren Verwendung zur Herstellung von zelligen und porösen Artikeln, insbesondere von Schaumstoffen aus thermoplastischen Kunststoffen.

Es ist bekannt, Schaumstoffe aus thermoplastischen Kunststoffen in der Weise herzustellen, daß man in den Kunststoff ein organisches chemisches Treibmittel einarbeitet oder auf ein Kunststoffgranulat ein Treibmittel auftrommelt oder mit einem Kunststoffpulver homogen vermischt, das sich bei Temperaturen, bei denen der Kunststoff plastisch wird, unter Gasentwicklung zersetzt.

In der Literatur sind Substanzen der verschiedenen Verbindungsklassen für diesen Verwendungszweck beschrieben, z. B. Azoverbindungen, Hydrazine, Semicarbazide, Triazole, Tetrazole, N-Nitrosoverbindungen, Benzoxazine u. a. (vgl. Kunststoffe 66 (1976) 10, S. 698—701).

Eines der am häufigsten eingesetzten organischen, chemischen Treibmittel ist Azodicarbonamid. Für die Abspaltung des Treibgases sind jedoch Temperaturen von 205—215°C erforderlich, was für eine Reihe von Einsatzgebieten von Nachteil ist.

Es hat in der Vergangenheit daher nicht an Bemühungen gefehlt, die Zersetzungstemperatur von Azodicarbonamid zu erniedrigen. Durch Zusatz von metallhaltigen Verbindungen, vor allem Blei-, Zink- und/oder Cadmiumverbindungen wurde es möglich, die Zersetzungstemperatur zu reduzieren. Nachteilig ist es jedoch immer noch, daß selbst mit den besten, handelsüblichen Kickern die Zersetzungsgeschwindigkeit von Azodicarbonamid bei Temperaturen von unter 160°C gering ist.

Ein weiterer Mangel, der bei Verwendung von Azodicarbonamid als Treibmittel beobachtet wird, ist der, daß Ammoniak mit bei den Zersetzungsgasen auftritt, was zur Korrosion an den bei der Schaumstoffherstellung verwendeten Metallformen führt. Ferner wird z. B. beim Spritzgießen von azodicarbonamidhaltigen Thermoplasten störender Formbelag festgestellt, der auf die bei der Zersetzung entstandene Cyanursäure zurückzuführen ist.

Die Bildung von Cyanursäure läßt sich gemäß DE-A 2 359 007 durch Zusatz von wasserhaltiger Kieselsäure bzw. wasserabspaltenden Metallsalzen weitgehend vermindern, nicht jedoch völlig unterdrücken. Von gravierendem Nachteil ist jedoch, daß durch die Anwesenheit von Wasser die Ammoniakbildung stark gefördert wird.

Aufgabe der Erfindung war es, eine Treibmittelkombination zu entwickeln, die es gestattet, Azodicarbonamid auch bei Temperaturen von unter 160°C genügend schnell zu zersetzen, ammoniakfreie Zersetzungsgase zu liefern und Formbelag zu verhindern.

Die gestellte Aufgabe konnte durch die erfindungsgemäßen Treibmittelkombinationen auf Basis von Azodicarbonamid, Zinkoxid und einem Benzolthiolsulfonsäurederivat der allgemeinen Formel I gelöst werden.

Gegenstand der Erfindung ist somit eine Treibmittelkombination auf Basis von Azodicarbonamid, Zinkoxid und einem Benzolthiosulfonsäurederivat der allgemeinen Formel I.

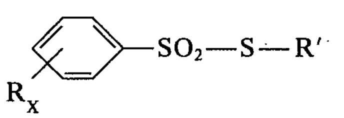 (I)

In dieser Formel bedeutet

R H, einen $C_1-C_4$-Alkylrest und/oder ein Chloratom,
X Zahlen von 1 bis 5,
R′ einen $C_1-C_4$-Alkylrest, einen $C_5-C_6$-Cycloalkylrest oder einen $C_7-C_8$-Arylalkylrest, wobei diese Reste gegebenenfalls durch 1—3 $C_1-C_4$-Alkylreste, 1—5 Chloratome und/oder einen Carbonsäure-$C_1-C_4$-Alkylesterrest substituiert sein können, oder einen Rest der allgemeinen Formeln IIa, IIb, IIc oder IId:

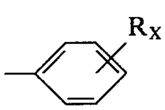
(IIa)

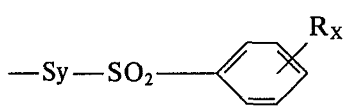
(IIb)

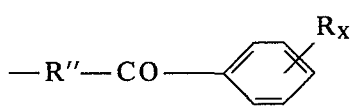
(IIc)

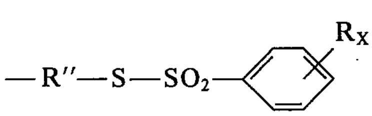
(IId)

in welchen

Y Zahlen von 0—3,
R″ einen $C_1-C_6$-Alkylenrest oder einen gegebenenfalls durch 1—4 Methylreste und/oder 1—4 Chloratome substituierten Xylylenrest bedeuten und
R sowie X die bereits angegebene Bedeutung besitzen.

Diese Treibmittelkombination enthält Azodicarbonamid als Treibmittel und eine Kickerkombination aus Zinkoxid und dem Benzolthiolsulfonsäurederivat der allgemeinen Formel I im Gewichtsverhältnis bevorzugt von 95 : 5 bis 5 : 95, besonders bevorzugt von 75 : 25 bis 25 : 75.

Die Kickermischung selbst setzt sich bevorzugt aus 90 bis 10, besonders bevorzugt aus 70 bis 30 Gewichtsprozent Zinkoxid und bevorzugt 10 bis 90, besonders bevorzugt von 30 bis 70 Gewichtsprozent des Benzolthiosulfonsäurederivates der allgemeinen Formel I zusammen.

Als Beispiele für die Benzolthiolsulfonsäurederivate werden genannt:

Benzolthiolsulfonsäure-methylester
Benzolthiolsulfonsäure-carbethoxymethylester
Benzolthiolsulfonsäure-benzoylmethylester
Benzolthiolsulfonsäure-ethylester
Benzolthiolsulfonsäure-n-propylester
Benzolthiolsulfonsäure-isopropylester
Benzolthiolsulfonsäure-n-butylester
Benzolthiolsulfonsäure-iso-butylester
Benzolthiolsulfonsäure-tert.-butylester
Benzolthiolsulfonsäure-octylester
Benzolthiolsulfonsäure-nonylester
Benzolthiolsulfonsäure-decylester
Benzolthiolsulfonsäure-dodecylester
Benzolthiolsulfonsäure-cyclopentylester
Benzolthiolsulfonsäure-cyclohexylester
Benzolthiolsulfonsäure-benzylester
Benzolthiolsulfonsäure-4-chlorbenzylester
Benzolthiolsulfonsäure-4-carbemethoxy-benzylester
Benzolthiolsulfonsäure-phenylester
Benzolthiolsulfonsäure-4-methylphenylester
Benzolthiolsulfonsäure-pentachlorphenylester
4-Chlorbenzolthiolsulfonsäure-methylester
4-Chlorbenzolthiolsulfonsäure-benzoylmethylester
4-Chlorbenzolthiolsulfonsäure-amylester
4-Chlorbenzolthiolsulfonsäure-hexylester
4-Chlorbenzolthiolsulfonsäure-cyclohexylester
4-Chlorbenzolthiolsulfonsäure-4-carbomethoxy-cyclohexylester
4-Chlorbenzolthiolsulfonsäure-benzylester
4-Chlorbenzolthiolsulfonsäure-4-methylbenzylester
4-Chlorbenzolthiolsulfonsäure-2-phenylethylester
4-Chlorbenzolthiolsulfonsäure-4-chlorphenylester
4-Methylbenzolthiolsulfonsäure-methylester
4-Methylbenzolthiolsulfonsäure-n-butylester
4-Methylbenzolthiolsulfonsäure-dodecylester
4-Methylbenzolthiolsulfonsäure-cyclohexylester
4-Methylbenzolthiolsulfonsäure-2-chlorbenzylester
4-Methylbenzolthiolsulfonsäure-2-methylphenylester
Dibenzolsulfonyl-monosulfid
Dibenzolsulfonyl-disulfid
Dibenzolsulfonyl-trisulfid
Dibenzolsulfonyl-tetrasulfid
Bis-4-methylbenzolsulfonyl-monosulfid
Bis-4-methylbenzolsulfonyl-disulfid
Bis-4-methylbenzolsulfonyl-trisulfid
Bis-4-methylbenzolsulfonyl-tetrasulfid
Bis-4-chlorbenzolsulfonyl-monosulfid
Bis-4-chlorbenzolsulfonyl-disulfid
Bis-4-chlorbenzolsulfonyl-trisulfid
Bis-4-chlorbenzolsulfonyl-tetrasulfid
Methylen-bis-benzolthiolsulfonsäureester

1,2-Ethylen-bis-benzolthiolsulfonsäureester
1,2-Ethylen-bis-4-methylbenzolthiolsulfonsäureester
1,2-Ethylen-bis-4-chlorbenzolthiolsulfonsäureester
1.4-Tetramethylen-bis-benzolthiolsulfonsäureester
1.4-Tetramethylen-bis-4-chlorbenzolthiolsulfonsäureester
1.4-Tetramethylen-bis-4-methylbenzolthiolsulfonsäureester
1.6-Hexamethylen-bis-benzolthiolsulfonsäureester
1.6-Hexamethylen-bis-4-chlorbenzolthiolsulfonsäureester
1.6-Hexamethylen-bis-4-methylbenzolthiolsulfonsäureester
o-, m- oder p-Xylylen-bis-benzolthiolsulfonsäureester
o-, m- oder p-Xylylen-bis-4-chlorbenzolthiolsulfonsäureester
o-, m- oder p-Xylylen-bis-4-methylbenzolthiolsulfonsäureester
Tetrachlor-o-, m- oder -p-Xylylen-bis-benzolthiolsulfonsäureester
Tetramethyl-o-, m-, oder p-Xylylen-bis-benzolthiolsulfonsäureester
Dimethyl-dichlor-o-, m- oder p-Xylylen-bis-benzolthiolsulfonsäureester.

Die Herstellung der Benzolthiolsulfonsäurederivate ist literaturbekannt und kann z. B. nach folgenden Verfahren erfolgen:

1) Umsetzung von benzolthiolsulfonsauren Salzen mit Alkyl-, Cycloalkyl-, Aralkyl-, Alkylen- oder Xylylenhalogeniden (oder -sulfaten oder -sulfonestern), z. B.

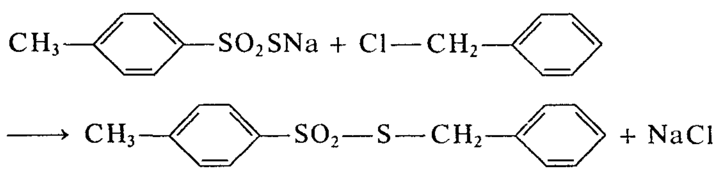

oder

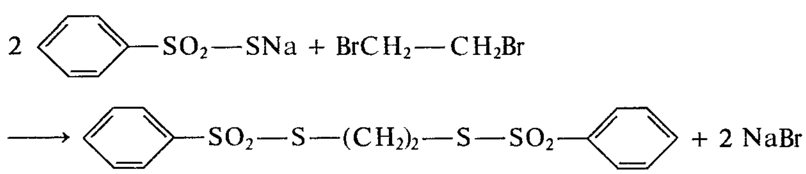

2) Umsetzung von benzolthiolsulfonsauren Salzen mit Schwefelhalogeniden,

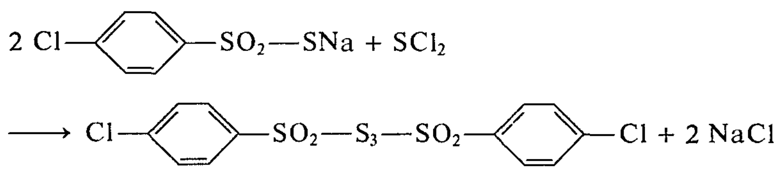

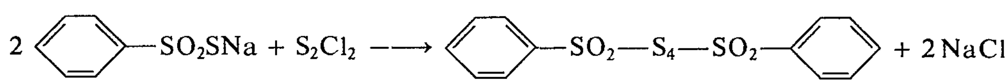

3) Umsetzung von benzolsulfinsauren Salzen mit Sulfensäurehalogeniden oder Schwefelhalogeniden, z. B.

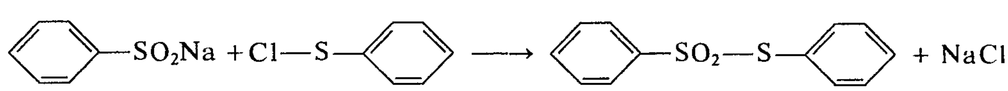

oder

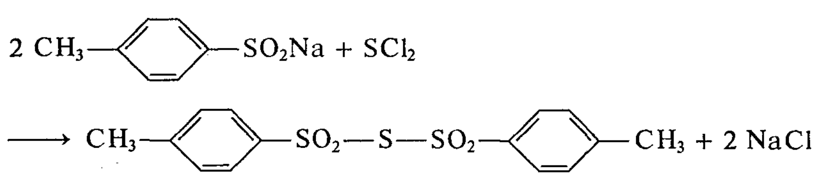

Die erfindungsgemäße Treibmittelkombination läßt sich durch Mischen der Komponenten in beliebiger Reihenfolge herstellen. Die Mischung erfolgt in den üblichen, dem Fachmann geläufigen Mischapparaturen, zweckmäßigerweise bei Temperaturen zwischen 15—30°C. In manchen Fällen ist

es empfehlenswert, Zinkoxid und das Benzolthiolsulfonsäurederivat kleingemahlenem Azodicarbonamid zuzugeben.

Mit Hilfe der erfindungsgemäßen Treibmittelkombinationen können zellige und poröse Gegenstände, insbesondere Schaumstoffe aus thermoplastischen Kunststoffen hergestellt werden. Als thermoplastische Kunststoffe seien beispielsweise ausgeführt:

Polyvinylchlorid, Polyäthylen, Polypropylen, Copolymerisate aus VC/VAC, VC/EVAC, E/VC, Propylen/VC, E/VAC, Polystyrol, Polyäthylstyrol, Polyamid, Polycarbonat, Polysulfon, Polyäthylenterephthalat, Polybutylenterephthalat, Polyphenylenoxid, Polyacrylnitril, Polymethacrylnitril, Polymethacrylat, Kunststoffe auf Basis von Celluloseestern, Acrylnitril-Butadien-Styrol-Polymere (ABS), Mischungen aus Polysulfon und Styrol-Acrylnitril- oder ABS-Polymeren, Mischungen aus Polycarbonat und ABS-Polymeren, Mischungen aus PVC und ABS-Polymeren bzw. Acrylnitril-Polymeren.

Die erfindungsgemäße Treibmittelkombination wird vorzugsweise in Mengen von 0,1 bis 25 Gewichts-%, besonders bevorzugt in Mengen von 0,3 bis 15 Gewichts-%, bezogen auf den Kunststoff, zugegeben. Sie kann jedoch auch in jeder anderen, dem Fachmann geläufigen Menge, zudosiert werden. Die jeweilige Zugabe richtet sich im einzelnen nach den Erfordernissen, die der Fachmann an den zu schäumenden Gegenstand stellt.

Zur Herstellung der zelligen und porösen Gegenstände werden die Treibmittel-Kunststoffmischungen bevorzugt auf Temperaturen von 140—350° C erhitzt, besonders bevorzugt von 145—300° C, wobei die Zersetzung des Treibmittels ein Aufschäumen des Kunststoffes bewirkt. Die im speziellen Fall angewandte Temperatur hängt vom Verarbeitungsbereich des jeweiligen Thermoplasten ab.

Als Beispiele für zellige und poröse Gegenstände seien genannt:

Schaumkunstleder für Polster-, Täschner- und Schuhindustrie, geschäumte Bodenbeläge, Schwimmwesten, Bojen- und Schwimmkörper, geschäumte Gehäuse für die Rundfunk- und Phonoindustrie, Möbel- und Möbelteile, Holzimitationen, geschäumte Extrusionsartikel wie Rohre, Profile aller Art, Kabelummantelungen, geschäumte Folien für Dekorations- und Verpackungszwecke.

Der Gegenstand der Erfindung wird durch die folgenden Beispiele erläutert.

Die mit einer der erfindungsgemäßen Treibmittelkombinationen erhaltene Gasabspaltung wird in Tabelle 1 verdeutlicht. Dargestellt ist die Gasabspaltung in Abhängigkeit vom Verhältnis ZnO zu Dibenzolsulfonyl-disulfid für verschiedene Temperaturen.

Beispiel Nr. 1 repräsentiert den Stand der Technik. In den Beispielen 2—10 wird die synergistische Wirkung zwischen ZnO und dem erfindungsgemäß eingesetzten Kicker sichtbar.

Die Gasabspaltung in Abhängigkeit von der Kicker-Konzentration für verschiedene Temperaturen ist in Tabelle 2 wiedergegeben.

Die Beispiele Nr. 18 und 19 repräsentieren wieder den Stand der Technik.

Tabelle 3 zeigt das spezifische Gewicht von PVC-Weichschäumen mit den beanspruchten Treibmittelkombinationen (Beispiel 22—37).

Beispiel 40 enthält nur Azodicarbonamid ohne Kicker. Die Beispiele 39, 41, 42, 43 und 44 repräsentieren den Stand der Technik.

Auch die Beispiele 11, 20, 21, 38 und 45 sind Vergleichsbeispiele.

Hergestellt wurden die PVC-Weich-Schäume auf einer mit Heißluft beheizten Beschichtungsanlage, Auflagegewicht 850 g/m$^2$, Gelier- und Schäumtemperatur 190° C, variiert wurden die Verweilzeiten im Gelierkanal von 2 Minuten (entspricht einer Produktionsgeschwindigkeit von 6 m/min) bis 1 Minute (entspricht 12 m/min).

Besonders bei hohen Produktionsgeschwindigkeiten wird der erfindungsgemäße Fortschritt (Beispiele 22—37) gegenüber dem heutigen Stand der Technik sichtbar (Beispiele 39, 41, 42, 43, 44).

Vergleich Beispiel 39 gegen 22

Bei einer Produktionsgeschwindigkeit von 6 m/min ( $\triangleq$ 2 Minuten Verweilzeit) erhält man bei ZnO als Kicker einen PVC-Weich-Schaum mit einem spez. Gewicht von 0,49 g/cm$^3$. Die erfindungsgemäße Treibmittelkombination liefert das gleiche spez. Gewicht von 0,49 g/cm$^3$ bei einer Produktionsgeschwindigkeit von 12 m/min ( $\triangleq$ 1 Minute Verweilzeit).

Entsprechendes gilt für die anderen Beispiele.

Tabelle 1

Gasabspaltung (ml) in Abhängigkeit vom Verhältnis ZnO : Kicker für verschiedene Temperaturen.

| Beispiel Nr. | Kicker (C) | B : C | Treibmittel-Kicker-Kombination[1]) in 15 ml DOP | | | Abgespaltene Gasmenge[2]) (ml) bei °C | | | |
|---|---|---|---|---|---|---|---|---|---|
| | | | A | B | C | 145 | 150 | 155 | 160 |
| 1 | Dibenzolsulfonyldisulfid | 10 : 0 | 1,0 | 1,5 | – | 8 | 13 | 22 | 62 |
| 2 | desgl. | 9 : 1 | 1,0 | 1,35 | 0,15 | 32 | 152 | 167 | 178 |
| 3 | desgl. | 8 : 2 | 1,0 | 1,20 | 0,30 | 46 | 147 | 168 | 183 |
| 4 | desgl. | 7 : 3 | 1,0 | 1,05 | 0,45 | 191 | 209 | 219 | 230 |
| 5 | desgl. | 6 : 4 | 1,0 | 0,90 | 0,60 | 192 | 212 | 224 | 233 |
| 6 | desgl. | 5 : 5 | 1,0 | 0,75 | 0,75 | 224 | 230 | 238 | 243 |
| 7 | desgl. | 4 : 6 | 1,0 | 0,60 | 0,90 | 226 | 232 | 238 | 245 |
| 8 | desgl. | 3 : 7 | 1,0 | 0,45 | 1,05 | 228 | 235 | 239 | 242 |
| 9 | desgl. | 2 : 8 | 1,0 | 0,30 | 1,20 | 163 | 170 | 178 | 186 |
| 10 | desgl. | 1 : 9 | 1,0 | 0,15 | 1,35 | 47 | 143 | 150 | 157 |
| 11 | desgl. | 0 : 10 | 1,0 | – | 1,5 | 0 | 0 | 0 | 0 |

[1]) A = (g) Azodicarbonamid, mittlere Teilchengröße 5 μm.
B = (g) ZnO.
C = (g) Kicker.

[2]) Volumetrische Messung der abgespaltenen Gasmenge in ml. A/B/C in 15 ml Di-2-ethylhexylphthalat (DOP) dispergiert und in 50 ml Glaskölbchen bei ca. 2°C/Minute Aufheizgeschwindigkeit aufgeheizt.

Tabelle 2

Gasabspaltung (ml) in Abhängigkeit von der Kickerkonzentration für verschiedene Temperaturen

| Beispiel Nr. | Kicker (C) | Treibmittel-Kicker-Kombination[1]) in 15 ml DOP | | | | Abgespaltene Gasmenge[2]) (ml) bei °C | | | |
|---|---|---|---|---|---|---|---|---|---|
| | | A | B | C | B : C | 145 | 150 | 155 | 160 |
| 12 | Dibenzolsulfonyldisulfid | 1,0 | 0,125 | 0,125 | 1 : 1 | 38 | 155 | 174 | 178 |
| 13 | desgl. | 1,0 | 0,25 | 0,25 | 1 : 1 | 132 | 189 | 190 | 193 |
| 14 | desgl. | 1,0 | 0,50 | 0,50 | 1 : 1 | 208 | 211 | 214 | 216 |
| 15 | desgl. | 1,0 | 0,75 | 0,75 | 1 : 1 | 224 | 230 | 238 | 243 |
| 16 | desgl. | 1,0 | 1,00 | 1,00 | 1 : 1 | 233 | 243 | 256 | 271 |
| 17 | desgl. | 1,0 | 1,50 | 1,50 | 1 : 1 | 200 | 232 | 266 | 275 |
| 18 | – | 1,0 | 0,75 | – | | 0 | 0 | 0 | 7 |
| 19 | – | 1,0 | 1,50 | – | | 8 | 13 | 22 | 62 |
| 20 | Dibenzolsulfonyldisulfid | 1,0 | – | 0,75 | | 0 | 0 | 0 | 0 |
| 21 | desgl. | 1,0 | – | 1,50 | | 0 | 0 | 0 | 0 |

Tabelle 3

Spezifisches Gewicht ($g/cm^3$) von PVC-Weich-Schäumen in Abhängigkeit von der Treibmittel-Kicker Kombination und unterschiedlichen Gelierzeiten bei 190°C, Auflagegewicht ca. 850 $g/m^2$

| Beispiel Nr. | Kicker (C)[6]) | Treibmittel-Kicker-Kombination[1]) | | | Spezifisches Gewicht ($g/cm^3$) bei 190°C und bei Minuten Gelierzeit ...[2]) | | | |
|---|---|---|---|---|---|---|---|---|
| | | A | B | C | 2,0 | 1,5 | 1,2 | 1,0 |
| 22 | Nr. 1 | 1,0 | 0,75 | 0,75 | 0,30 | 0,33 | 0,39 | 0,49 |
| 23 | Nr. 2 | 1,0 | 0,75 | 0,75 | 0,30 | 0,34 | 0,40 | 0,51 |
| 24 | Nr. 3 | 1,0 | 0,75 | 0,75 | 0,30 | 0,31 | 0,37 | 0,48 |
| 25 | Nr. 4 | 1,0 | 0,75 | 0,75 | 0,30 | 0,34 | 0,43 | 0,56 |
| 26 | Nr. 5 | 1,0 | 0,75 | 0,75 | 0,30 | 0,33 | 0,40 | 0,51 |
| 27 | Nr. 6 | 1,0 | 0,75 | 0,75 | 0,30 | 0,33 | 0,40 | 0,53 |
| 28 | Nr. 7 | 1,0 | 0,75 | 0,75 | 0,30 | 0,34 | 0,41 | 0,53 |
| 29 | Nr. 8 | 1,0 | 0,75 | 0,75 | 0,30 | 0,33 | 0,39 | 0,51 |
| 30 | Nr. 9 | 1,0 | 0,75 | 0,75 | 0,32 | 0,36 | 0,42 | 0,56 |
| 31 | Nr. 10 | 1,0 | 0,75 | 0,75 | 0,29 | 0,32 | 0,38 | 0,50 |
| 32 | Nr. 11 | 1,0 | 0,75 | 0,75 | 0,30 | 0,33 | 0,38 | 0,49 |

Fortsetzung

| Bei-spiel Nr. | Kicker (C)[6]) | Treibmittel-Kicker-Kombination[1]) | | | Spezifisches Gewicht ($g/cm^3$) bei 190°C und bei Minuten Gelierzeit ...[2]) | | | |
|---|---|---|---|---|---|---|---|---|
| | | A | B | C | 2,0 | 1,5 | 1,2 | 1,0 |
| 33 | Nr. 12 | 1,0 | 0,75 | 0,75 | 0,32 | 0,34 | 0,42 | 0,52 |
| 34 | Nr. 13 | 1,0 | 0,75 | 0,75 | 0,35 | 0,39 | 0,47 | 0,61 |
| 35 | Nr. 14 | 1,0 | 0,75 | 0,75 | 0,30 | 0,32 | 0,38 | 0,49 |
| 36 | Nr. 15 | 1,0 | 0,75 | 0,75 | 0,31 | 0,33 | 0,39 | 0,49 |
| 37 | Nr. 16 | 1,0 | 0,75 | 0,75 | 0,30 | 0,32 | 0,38 | 0,48 |
| 38 | Nr. 1 | 1,0 | – | 1,5 | 0,54 | 0,62 | 0,68 | 0,74 |
| 39 | – | 1,0 | 1,5 | – | 0,49 | 0,59 | 0,73 | 0,92 |
| 40 | – | 1,0 | – | – | 0,59 | 0,68 | 0,82 | 0,94 |
| 41 | Naftovin T80[3]) | 1,0 | – | 1,5 | 0,48 | 0,60 | 0,73 | 0,88 |
| 42 | Naftovin T80 | 1,0 | 0,75 | 0,75 | 0,34 | 0,53 | 0,69 | 0,85 |
| 43 | Sicostab M64[4]) | 1,0 | – | 1,5 | 0,41 | 0,45 | 0,55 | 0,64 |
| 44 | Sicostab M64 | 1,0 | 0,75 | 0,75 | 0,41 | 0,44 | 0,59 | 0,72 |
| 45 | ZnS | 1,0 | – | 1,5 | 0,57 | 0,68 | 0,80 | 0,90 |

[1]) A = (g) Azodicarbonamid (5μm) / B = (g) ZnO / C = (g) Kicker.
[2]) PVC-Schaumpaste:
50,0 g PVC (Vestolit E7012) / 37,5 g DOP
12,5 g BBP, / 1,5 g Irgastab 17 Mol[5])
X g Treibmittel-Kicker-Kombination A/B/C.
[3]) Naftovin® T80 ≙ dibas. Bleiphthalat, Hersteller: Metallgesellschaft Frankfurt/M.
[4]) Sicostab® M64 ≙ Cd/Zn-Komplex, Hersteller: Siegling/Stuttgart.
[5]) Irgastab® 17 MoL ≙ Di-n-octylzinn-bis-thioglycolsäureisooctylester/Glycerinmonofettsäureestersäureester 75/25, Hersteller: Ciba-Geigy/Basel.
[6]) Die aufgeführten Kicker (C) sind der nachfolgenden Tabelle 4 zu entnehmen:

**Tabelle 4**

**Kicker Nr. 1 = Dibenzolsulfonyl-disulfid**
**Kicker Nr. 2 = Dibenzolsulfonyl-monosulfid**
**Kicker Nr. 3 = Bis-4-chlorbenzolsulfonyl-disulfid**
**Kicker Nr. 4 = Bis-4-methylbenzolsulfonyl-disulfid**
**Kicker Nr. 5 = Dibenzolsulfonyl-tetrasulfid**
**Kicker Nr. 6 = 1,2-Ethylen-bis-4-methylbenzolthiolsulfonsäureester**
**Kicker Nr. 7 = 4-Methylbenzolthiosulfonsäure-methylester**
**Kicker Nr. 8 = Benzolthiolsulfonsäure-methylester**
**Kicker Nr. 9 = Benzolthiolsulfonsäure-carbethoxymethylester**
**Kicker Nr. 10 = Benzolthiolsulfonsäure-ethylester**
**Kicker Nr. 11 = Benzolthiolsulfonsäure-benzylester**
**Kicker Nr. 12 = Benzolthiolsulfonsäure-4-carbomethoxybenzylester**
**Kicker Nr. 13 = Benzolthiolsulfonsäure-benzoylmethylester**
**Kicker Nr. 14 = o-Xylylen-bis-benzolthiolsulfonsäureester**
**Kicker Nr. 15 = Tetrachlor-m-xylylen-bis-benzolthiolsulfonsäureester**
**Kicker Nr. 16 = p-Xylylen-bis-benzolthiolsulfonsäureester**

Beispiel 46

Ein PVC-Plastisol aus:

| | |
|---|---|
| 50 Gew.-Teilen | Pasten-PVC, K-Wert 70 (pH des wäßrigen Auszuges = 7,0) |
| 50 Gew.-Teilen | DOP |
| 0,5 Gew.-Teilen | Diphenylthioharnstoff |
| 10 Gew.-Teilen | Azodicarbonamid (mittlere Teilchengröße 5,0 nm) |
| 6 Gew.-Teilen | Dibenzolsulfonyl-disulfid |
| 9 Gew.-Teilen | ZnO |

wird in eine gasdichte Stahlform von 100 x 100 x 10 mm Größe eingeführt und unter der Hochdruckpresse bei 25 bar und 170° C 20 Minuten verpreßt. Nach dem Abkühlen wird der Formling 30 Minuten bei 100° C Heißluft nachgeheizt. Man erhält einen feinporigen Schaum mit einem Raumgewicht von 52 kg/$m^3$.

Beispiel 47

In einem Taumelmischer werden 1000 g ABS-Polymerisat mit 1,5 g Paraffinöl während 10 Minuten Mischzeit vermischt. Nach dieser Mischzeit werden 2,5 g Azodicarbonamid 1,25 g ZnO und 1,25 g Dibenzolsulfonyl-monosulfid zugesetzt und durch weiteres Mischen auf der ABS-Oberfläche homogen verteilt. Die so hergestellte Mischung wird anschließend auf einer in der Praxis üblichen Schneckenspritzgießmaschine mit Nadelverschlußdüse bei einer Massetemperatur von 220° C zu 9 mm Formkörpern verschäumt. Man erhält einen feinporigen Schaum mit einer regelmäßigen Schaumstruktur und einer Dichte von 0,65 g/$cm^3$. Die Spritzgießform war frei von Formbelag, Ammoniakbildung konnte nicht beobachtet werden.

Beispiel 48

Ein Plastisol aus

| | |
|---|---|
| 55 Gew.-Teilen | PVC/PVAc (PVAc-Gehalt 5%) |
| 45 Gew.-Teilen | Alkansulfonsäureester des Phenol (Handelsname: Mesamoll/Bayer AG) |
| 1,5 Gew.-Teilen | Di-n-octylzinn-bis-thioglycolsäureoctylester |
| 1,0 Gew.-Teilen | Azodicarbonamid |
| 0,60 Gew.-Teilen | ZnO |
| 0,90 Gew.-Teilen | Dibenzolsulfonyl-monosulfid |

wird bei 160° C Heißlufttemperatur und 6 Minuten Verweilzeit und einem Auflagegewicht von 850 g/$m^2$ verschäumt. Man erhält einen feinporigen Schaum mit einem spez. Gewicht von 0,40 g/$cm^3$.

Vergleichsweise liefert das Plastisol aus Beispiel 48 mit 1,0 Tle/5-Morpholy-1,2,3,4-thiatriazol und 0,75 Tle ZnO unter den gleichen Bedingungen einen Schaum mit einem spezifischen Gewicht von 0,47 g/$cm^3$.

5-Morpholyl-1,2,3,4-thiatriazol wurde als ein handelsübliches Treibmittel mit niedriger Zersetzungstemperatur ausgewählt und verglichen.

**Patentansprüche**

1. Treibmittelkombination bestehend aus Azodicarbonamid, Zinkoxid und einem Benzolthiolsulfonsäurederivat der allgemeinen Formel I

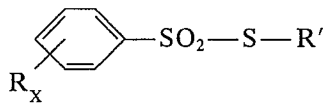

in der

R Wasserstoff-, einen $C_1$—$C_4$ Alkylrest und/oder ein Chloratom darstellt,
X Zahlen von 1 bis 5 bedeutet,
R′ einen $C_1$—$C_4$-Alkylrest, einen $C_5$—$C_6$-Cycloalkylrest oder einen $C_7$—$C_8$-Arylalkylrest, wobei diese Reste gegebenenfalls durch 1—3 $C_1$—$C_4$-Alkylreste, 1—5 Chloratome und/oder einen

Carbonsäure-$C_1-C_4$-Alkylesterrest substituiert sein können, oder einen Rest der allgemeinen Formeln IIa, IIb, IIc oder IId

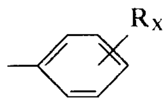

(IIa)

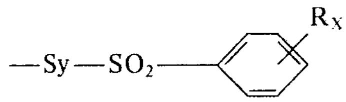

(IIb)

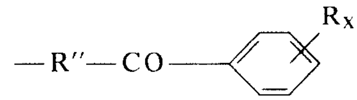

(IIc)

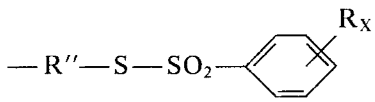

(IId)

darstellt, in denen

Y Zahlen von 0—3 darstellt,
R″ einen $C_1-C_6$-Alkylrest oder einen gegebenenfalls durch 1—4 Methylreste und/oder 1—4 Chloratome substituierten Xylylenrest bedeutet und
R sowie X die bereits angegebene Bedeutung besitzen.

2. Treibmittelkombination gemäß Anspruch 1, bestehend aus 95 bis 5 Gewichtsteilen Azodicarbonamid und 5 bis 95 Gewichtsteilen einer Mischung aus Zinkoxid und Benzolthiolsulfonsäurederivat.

3. Treibmittelkombination gemäß Anspruch 2, dadurch gekennzeichnet, daß die Mischung aus 90 bis 10 Gew.-% Zinkoxid und 10 bis 90 Gew.-% des Benzolthiolsulfonsäurederivats besteht.

4. Verfahren zur Herstellung der Treibmittelkombination gemäß Ansprüchen 1 bis 3, dadurch gekennzeichnet, daß man die Komponente in beliebiger Reihenfolge miteinander mischt.

5. Verfahren gemäß Anspruch 4, dadurch gekennzeichnet, daß man die Mischung bei Temperaturen zwischen 15 und 30°C durchführt.

6. Verwendung der Treibmittelkombination gemäß Ansprüchen 1 bis 3 zur Herstellung von porösen Artikeln aus thermoplastischen Kunststoffen.

7. Verwendung gemäß Anspruch 6 in Mengen von 0,1 bis 25 Gew.-%, bezogen auf den eingesetzten Kunststoff.

**Claims**

1. A blowing agent combination consisting of azodicarbonamide, zinc oxide and a benzenethiol sulphonic acid derivate of the general formula I

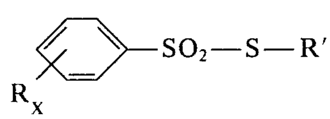

in which

R represents hydrogen, a $C_1-C_4$ alkyl radical and/or a chlorine atom,
X denotes a number from 1 to 5,
R′ represents a $C_1-C_4$ alkyl radical, a $C_5-C_6$ cycloalkyl radical or a $C_7-C_8$ arylalkyl radical, it being possible for these radicals to be optionally substituted by 1—3 $C_1-C_4$ alkyl radicals, 1—5 chlorine atoms and/or a carboxylic acid-$C_1-C_4$ alkyl ester radical, or a radical of one of the general formulae IIa, IIb, IIc or IId

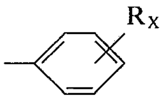

(IIa)

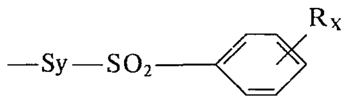

(IIb)

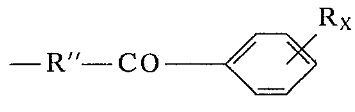

(IIc)

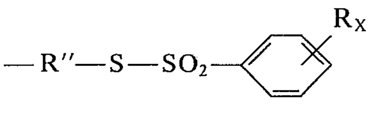

(IId)

in which

Y represents a number from 0 to 3,
R″ represents a $C_1-C_6$ alkylene radical or a xylylene radical which is optionally substituted by 1—4 methyl radicals and/or 1—4 chlorine atoms and
R and X have the meaning already given.

2. A blowing agent combination according to Claim 1, consisting of 95 to 5 parts by weight of azodicarbonamide and 5 to 95 parts by weight of a mixture of zinc oxide and the benzenethiol sulphonic acid derivative.

3. A blowing agent combination according to Claim 2, characterised in that the mixture consists of 90 to 10% by weight of zinc oxide and 10 to 90% by weight of the benzenethiol sulphonic acid derivative.

4. Process for the production of the blowing agent combination according to Claims 1 to 3, characterised in that the components are mixed with one another in any sequence.

5. Process according to Claim 4, characterised in that the mixing is carried out at temperatures between 15 and 30° C.

6. Use of the blowing agent combination according to Claims 1 to 3 for the production of porous articles of thermoplastic synthetic materials.

7. Use according to Claim 6 in amounts of 0.1 to 25% by weight, based on the weight of synthetic material used.

**Revendications**

1. Mélange porogène consistant en azodicarbonamide, oxyde de zinc et un dérivé d'acide benzènethiolsulfonique de formule générale I

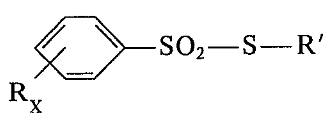

dans laquelle

R représente l'hydrogène, un reste alkyle en $C_1-C_4$ et/ou un atome de chlore,
X représente des nombres de 1 à 5,
R′ représente un reste alkyle en $C_1-C_4$, un reste cycloalkyle en $C_5-C_6$ ou un reste arylalkyle en $C_7-C_8$, ces restes pouvant être éventuellement substitués üar 1 à 3 restes alkyles en $C_1-C_4$, 1 à 5 atomes de chlore et/ou un reste ester d'alkyle en $C_1-C_4$ d'acide carboxylique, ou bien un reste de formule IIa, IIb, IIc ou IId:

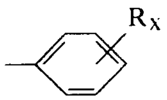

(IIa)

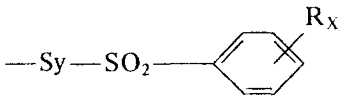

(IIb)

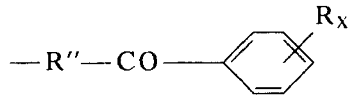

(IIc)

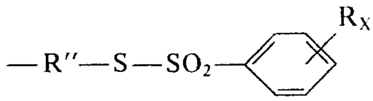

(IId)

dans lesquelles

Y représente des nombres de 0à 3,
R″ représente un reste alkylène en $C_1-C_6$ ou un reste xylylène éventuellement substitué par 1 à 4 restes méthyles ou 1 à 4 atomes de chlore, et
R et X ont la signification déjà indiquée.

2. Mélange porogène selon la revendication 1, consistant en 95 à 5 parties en poids d'azodicarbonamide et 5 à 95 parties en poids d'un mélange d'oxyde de zinc et de dérivés d'acide benzènethiolsulfonique.

3. Mélange porogène selon la revendication 2, caractérisé en ce que le mélange consiste en 90 à 10% en poids d'oxyde de zinc et 10 à 90% en poids du dérivé d'acide benzènethiolsulfonique.

4. Procédé pour la préparation du mélange porogène selon les revendications 1 à 3, caractérisé en ce que l'on mélange entre eux les composants dans un ordre quelconque.

5. Procédé selon la revendication 4, caractérisé en ce que l'on effectue le mélange à des températures comprises entre 15 et 30° C.

6. Utilisation du mélange porogène selon les revendications 1 à 3 pour la préparation d'articles poreux en matières thermo-plastiques.

7. Utilisation selon la revendication 6 en quantités de 0,1 à 25% en poids par rapport à la matière plastique utilisée.